# EUROPEAN PATENT APPLICATION

(11) **EP 2 879 135 A1**
(43) Date of publication of application: **03.06.2015**
(21) Application number: 14306691.8
(22) Date of filing: 23.10.2014
(51) Int. Cl.: H01B 7/295, H01B 3/30

(54) **Fire resistant compositions**

(30) Priority: 28.11.2013 AU 2013904608
(71) Applicant: Nexans, 75008 Paris (FR)
(72) Inventor: Alexander, Graeme, TOTTENHAM, Victoria 3012 (AU); Ivanov, Ivan, TOTTENHAM, Victoria 3012 (AU)
(74) Representative: Feray, Valérie

(57) **Abstract**

A fire resistant composition for use in fire resistant cables including at least one organic polymer and at least one inorganic material, said fire resistant composition being adapted to provide after exposure to high temperature a high resistance residue including 10% by weight of SiO₂.

## Description

### Field of the invention

This invention relates to fire resistant materials.

The invention will be described in relation to polymeric compositions which have useful fire resistant properties and which may be used in a variety of applications where prevention of short circuits in the event of a fire is necessary. The present invention will be described with reference to insulation for electric cables, where the retention of electric insulating properties is necessary, although it will be appreciated that the invention can be used in other applications requiring fire resistant insulation.

In particular, the invention will be described in the context of a sacrificial layer for application between a conductor and an outer fire resistant layer.

### Background of the invention

Electric cables applications typically consist of a central conductor surrounded by at least an insulating layer. Such cables find widespread use in buildings and indeed form the basis for almost all electric circuits in domestic, office and industrial buildings. In some applications, e.g. in emergency power and communication circuits, there is a requirement for cables that continue to operate and provide circuit integrity even when subjected to fire, and there is a wide range of standards for cables of this type. To meet some of these standards, cables are typically required to at least maintain electrical circuit integrity when heated to a specified temperature (eg, 650, 750, 950, 1050° C.) in a prescribed manner and for a specified time (eg, 15 min, 30 min, 60 min, 2 hours). In some cases, the cables are subjected to regular mechanical shocks during the heating stage. For example, they may be subjected to a water jet or spray either in the later stages of the heating cycle or after the heating stage. To meet a given standard, a cable is typically required to maintain circuit integrity throughout the test. Thus, it is important that the insulation maintains low conductivity (even after prolonged heating at high temperatures), maintains its shape so it does not shrink and crack, and is mechanically strong, particularly if it is required to remain in place during shock such as that resulting from mechanical impact due to water jet or spray exposure. It is also desirable that the insulation layer remaining after heating resists the ingress of water if the cable is required to continue operating during exposure to water spray for brief periods.

One method of improving the high temperature performance of an insulated cable has been to wrap the conductor of the cable with tape made with glass fibres and coated with mica. Such tapes are wrapped around the conductor during production and then at least one insulation layer is applied. Upon being exposed to increasing temperatures, the outer layer(s) are degraded and fall away, but the glass fibres hold the mica in place. These tapes have been found to be effective for maintaining circuit integrity in fires, but are quite expensive. Further, the process of wrapping the tape around the conductor is relatively slow compared with other cable production steps, and thus wrapping the tape slows overall production of the cable, again adding to the cost. A fire resistant coating that could be applied during the production of the cable by extrusion, thereby avoiding the use of tapes, is desirable.

Certain compositions that exhibit fire-resistance do not also display suitably high electrical resistivity at elevated temperature. When used in cable applications, these compositions provide only thermal insulation and/or a physical barrier between the conductor and supporting metal trays or brackets and tend to be electrically conducting in a fire situation leading to circuit failure. In this case, additional steps must be taken to ensure electrical insulation is maintained at elevated temperature.

Fire resistant cables, also known as circuit integrity cables, usually rely on ceramifying compositions comprising glassy components or fluxes (e.g. P₂O₅ (melting point 340°C) from APP (ammonium polyphosphate), B₂O₃ (melting point 450°C) from borates and borosilicates, and alkaline silicates) to produce sufficient mechanical strength and water repellence as cables may experience water spray during a fire fighting operation ceramic strength. However, said glassy components have a drawback in that they tend to increase the ionic conductivity and hence leakage currents during a fire, causing early failure.

WO2005095545 describes such a ceramifying composition for use in fire resistant applications, including at least 10% by weight of mineral silicate, from 8% to 40% by weight of at least one inorganic phosphate which forms a liquid phase at a temperature of no more than 800°C, and at least 15% by weight of a polymer base composition comprising at least 50% by weight of an organic polymer.

This problem is further exacerbated by reactions between a metallic conductor (such as a copper conductor) and such glasses. Current solutions to prevent reactions with the metallic conductor and to reduce leakage currents include extruding another layer between the conductor and the ceramifying insulation. Such 'sacrificial' can be, for example, silicone rubber.

However, using silicone rubber as a 'sacrificial layer' between an outer ceramifying insulation layer and a metallic conductor requires the additional step of curing the silicone rubber using, for example continuous vulcanization (CV) lines, salt lines, or hot air lines, which adds extra cost, especially in combination with thermoplastic outer ceramifying insulation layer, which can only be applied after the silicone rubber has been cured. Silicone rubber is also expensive.

Instead of using silicone rubber as a "sacrificial" layer, US7304245 discloses an electric cable able to maintain circuit integrity comprising an heat transformable layer that minimises or avoids adhesion of the outer ceramifying layer to the metallic conductor. Said heat transformable layer comprises one or more organic polymers including crosslinkable organic polymers, one or more inorganic fillers such as alumina, magnesium oxide, magnesium hydroxide, calcium silicate, zirconia or aluminium hydroxyde, and other additives including peroxides and flame retardants. US7304245 expressly excludes silicon dioxide as a silicate mineral filler in the heat transformable layer.

US7304245 also teaches that the above-mentioned heat transformable layer (unlike silicone polymer) shows no visible cracking of the ceramic layer after firing.

In addition, US7304245 contemplates the use of an intermediate crosslinking process before the outer ceramifying layer is applied.

However, the use of most crosslinkable organic polymers with inorganic fillers and peroxides as the inner sacrificial layer, suffers from the above-mentioned problems. That is to say, the crosslinkable polymer must be crosslinked in an additional step before the outer ceramifying layer can be applied, resulting in a two step process. In addition, the inventors of the present invention have found that an inner sacrificial layer including the inorganic fillers of US7304245 such as magnesium hydroxide or magnesium oxide between a conductor and an outer ceramifying layer, does not meet the fire resistance standards above about 850°C (see comparative examples of the present invention).

Moreover, two layer insulated conductors are conventionally sheathed with a commercially available halogen-free, low-smoke compound (HFFR sheath) to form the finished cable. However, sheathing a two layer insulated cable triggers two additional problems that reduce the performance of such cables:
- the use of HFFR sheath reduces the amount of oxygen available to burn off the polymeric components of the ceramifying insulation, hence reducing the rate of ceramic formation. As a consequence, the formed ceramic residue is often not sufficiently resistant to water spray applied in AS/NZS 3013 and BS6387 cat. W standard tests, and the commercially available HFFR materials leave a soft residue after firing that also absorbs water, increasing the leakage currents.
- the use of two layers practically halves the thickness of the ceramifying insulation and of the sacrificial layer. Ideally, it would be desirable to have the whole wall thickness providing both functions, i.e. reduce leakage current (as the inner layer does) and repel the water (as achieved by the outer fully ceramified layer).

Thus, it is desirable to provide a new fire resistant composition replacing the sacrificial layer of the prior art, in order to mitigate one or more of the problems of the prior art, eg to reduce costs, improve efficiency of the manufacturing process, or mitigate adverse chemical reactions between the ceramifying layer and a cable conductor.

It is desirable to provide a replacement for the sacrificial layer which does not require a separate crosslinking process before an outer ceramifying layer is applied.

It is desirable to provide a sacrificial layer which can be co-extruded with an outer ceramifying layer.

It is desirable that the sacrificial layer can prevent reaction of copper with glassy components and/or fluxes from the outer ceramifying layer.

It is desirable that the sacrificial layer can maintain high insulation resistance at elevated temperatures.

In particular, it is desirable to provide fire resistant cables that rely at least on two functional layers: 1) at least an outer layer that transforms into ceramic when fired, and 2) at least an inner (sacrificial) layer.

It is also desirable to have the whole wall thickness of the fire resistant cable that would only consist of the 'sacrificial' layer and the ceramifying layer, that is to say to have the ceramifying layer that would be used as an outmost layer.

### Summary of the invention

The present invention addresses the problems with the prior art and provides a fire resistant composition that can provide fire resistance and meets the required AS3013 fire test. The present invention also provides a cable comprising an inner sacrificial layer obtained from said fire resistant composition, said sacrificial layer being able to prevent reaction of copper with glassy components and/or fluxes from an outer ceramifying layer and to maintain high insulation resistance at elevated temperatures.

As used in this specification, the term "ceramifying materials" refers to materials which individually or in combination with other materials form a cohesive residue on exposure to high temperature. The residue can be inorganic. The level of the high temperature at which ceramification occurs and the corresponding ceramifying materials can be selected to suit the required application of the ceramifying material.

As used in this specification, the word "polymer" can refer to a single polymer or to a blend of two or more polymers. Where it is intended to restrict the word "polymer" to a single polymer, the expression "single polymer" will be used.

According to an embodiment of the invention, there is provided a fire resistant composition including at least one organic polymer and at least one inorganic material, wherein said fire resistant composition is adapted to provide after exposure to high temperature a high resistance residue including at least 10% by weight of SiO₂. Thus, the fire resistant composition of the present invention yields a sufficient amount of SiO₂ after firing to provide insulation resistance at elevated temperature.

The high resistance residue which is formed after exposure to high temperature can include at least about 15% by weight of SiO₂, and preferably at least about 25% by weight of SiO₂.

The inorganic material can be selected from an inorganic polymeric material, an inorganic non polymeric material and a mixture thereof.

Preferably, the inorganic material is an inorganic non polymeric material, or a mixture of an inorganic non polymeric material and an inorganic polymeric material.

The inorganic polymeric material has preferably a viscosity going from 10 000 000 mPa·s to 50 000 000 mPa·s at 25°C.

In one preferred embodiment, the inorganic polymeric material is different from liquid silicone rubbers (LSRs) which have a viscosity going from 10 000 mPa·s and 1 000 000 mPa·s at 25° C.

The inorganic non polymeric material can be silica.

The inorganic non polymeric material can include at least about 2%, preferably at least about 5%, and more preferably at least about 7% by weight of silica (SiO₂).

The inorganic non polymeric material can include up to about 45%, preferably up to about 25%, and more preferably up to about 17% by weight of silica (SiO₂).

The silica as inorganic non polymeric material can be alkali-free silica. Indeed, alkali contamination has the drawback of reducing the resistance of the fire resistant composition. Thus, the silica as inorganic non polymeric material is preferably different from precipitated silica since precipitated silica comprises residual alkaline content. Examples of such precipitated silica are silica VN3 or silica AB905.

The silica as inorganic non polymeric material can be hydrophobic silica.

The silica as inorganic non polymeric material can be fumed silica. Fumed silica does not comprise residual alkaline content, and therefore is less conductive, which leads to a fire resistant composition displaying better properties in terms of fire resistance.

The fumed silica can be hydrophobic fumed silica.

The inorganic polymeric material can include at least one polyorganosiloxane.

The inorganic polymeric material can include at least about 2%, and preferably at least about 5% by weight of polyorganosiloxanes.

The inorganic polymeric material can include up to about 45%, preferably up to about 25%, and more preferably up to about 15% by weight of polyorganosiloxanes.

Preferably, polyorganosiloxanes can be in the form of pelletized silicone polymer (e.g. Genioplast® pellet S commercialized by Wacker Chemie AG).

Polydimethylsiloxanes are preferred. Polydimethylsiloxanes having a viscosity going from 10 000 000 mPa·s to 50 000 000 mPa·s at 25°C are preferred.

The organic polymer can be homopolymer or copolymer.

Copolymers of two or more monomers and/or of two or more polymers may also be employed. The organic polymer can comprise a mixture or blend of two or more different organic polymers.

An organic polymer is one which has an organic polymer as the main chain of the polymer. For example, silicone polymers are not considered to be organic polymers.

Suitable organic polymers are commercially available or may be made by the application or adaptation of known techniques. Examples of suitable organic polymers that may be used are given below but it will be appreciated that the selection of a particular organic polymer will also be impacted by such things as the additional components to be included in the fire resistant composition, the way in which the composition is to be prepared and applied, and the intended use of the composition.

By way of illustration, examples of organic polymers suitable for use include polyolefins. However, polyacrylates, polycarbonates, polyamides (including nylons), polyesters, polystyrenes and polyurethanes may also be suitable.

The organic polymer can be selected preferably from ethylene-butene copolymer, linear low density polyethylene (LLDPE), ethylene-octene copolymer, ethylene-acrylic ester maleic anhydride terpolymer, ethylene propylene polymer (EPR), ethylene propylene diene polymer (EPDM), and mixture thereof.

The organic polymer can be selected from thermoplastic polymers and thermosetting polymers.

The organic polymers that are particularly well suited for use in making coatings for cables are commercially available thermoplastic olefin based polymers, co- and terpolymers of any density.

In one embodiment, the thermoplastic polymer can be selected from ethylene-butene copolymer, linear low density polyethylene, ethylene-octene copolymer, ethylene-acrylic ester maleic anhydride terpolymer, and mixture thereof.

In another embodiment, the thermosetting polymer can be selected from ethylene propylene polymer (EPR), ethylene propylene diene polymer (EPDM), and mixture thereof.

As noted, the organic polymer chosen will in part depend upon the intended use of the composition. For instance, in certain applications a degree of flexibility is required of the composition (such as in electrical cable coatings) and the organic polymer will need to be chosen accordingly based on its properties when loaded with additives. Also in selecting the organic polymer account should be taken of any noxious or toxic gases which may be produced on decomposition of the polymer. Preferably, the organic polymer used is halogen-free.

The fire resistant composition can include from about 15% to about 65% of organic polymer, preferably from about 20% to about 40%, and more preferably from about 25% to about 35% by weight of organic polymer.

The material can further include at least one inorganic filler. The inorganic filler is different from the inorganic material.

The inorganic filler can have low conductivity at elevated temperatures.

The inorganic filler can be selected from non-reactive silicates such as talc, CaSiO₃ (wollastonite) or a mixture thereof.

The fire resistant composition can include about 20% to about 60%, and preferably about 35% to about 55% by weight of non-reactive silicates.

Talc is preferred since it provides the best inertness and sufficient insulation resistance. Moreover, it improves compounding.

The fire resistant composition can exclude glass forming components.

The fire resistant composition can include substantially no MgO.

The fire resistant composition can include substantially no Mg(OH)₂.

As used in this specification, the expression "substantially no MgO" means that the fire resistant composition comprises at most 1.5% by weight of MgO, preferably at most 1% by weight of MgO, and more preferably at most 0,5% by weight of MgO.

As used in this specification, the expression "substantially no Mg(OH)₂" means that the fire resistant composition comprises at most 1.5% by weight of Mg(OH)₂, preferably at most 1% by weight of Mg(OH)₂, and more preferably at most 0.5% by weight of Mg(OH)₂.

The fire resistant composition can be a fire resistant thermoplastic composition. Thus, said fire resistant thermoplastic composition is non-crosslinkable and therefore, it include no crosslinkers, no silane coupling agents, no photoinitiators, no peroxides, and no other additives that involve crosslinking.

The fire resistant composition can be a fire resistant insulating composition.

The fire resistant composition of the invention is adapted to form an inner sacrificial layer between an elongated electrical conductor and an outer ceramifying layer, wherein the fire resistant composition does not require a separate crosslinking process. Therefore, the outer ceramifying layer can be extruded over the inner sacrificial layer or co-extruded with the inner sacrificial layer without the need for a separate crosslinking process.

The invention also provides a cable comprising:
- an elongated electrical conductor,
- an inner layer obtained from the above described fire resistant composition, said inner layer surrounding said elongated electrical conductor, and
- an outer ceramifying layer surrounding said inner layer.

The cable can be sheathed with a commercially available halogen-free, low-smoke compound (HFFR sheath) to form the finished cable.

The elongated electrical conductor can be a single core conductor (i.e. to produce a single core cable). Thus, the single core conductor is insulated first, with the inner layer obtained from the fire resistant composition of the present invention and then, with the outer ceramifying layer. The resulting two layer insulated core conductor is then sheathed with HFFR sheath.

The elongated electrical conductor can be a multicore conductor. Therefore, the elongated electrical conductor comprises a plurality of core conductors. Thus, each core conductor is insulated first, with the inner layer obtained from the fire resistant composition of the present invention and then, with the outer ceramifying layer. The resulting plurality of two layer insulated core conductors is then twisted, taped and sheathed with HFFR sheath.

Preferably, the outer ceramifying layer is thermoplastic.

The inner layer can be a thermoplastic layer. Thus, said thermoplastic inner layer is non-crosslinked. "Non-crosslinked" means that said layer displays a gel rate according to ASTM D2765-01 test which is at most of 20%, preferably at most of 10%, preferably at most of 5%, and more preferably of 0%.

The inner layer can be an insulating inner layer. An insulating inner layer is a layer displaying an electrical conductivity that can be at most 1.10⁻⁹ S/m (siemens per meter) (at 25°C).

The thickness of the inner layer can be less than 1 mm.

The total wall thickness of the insulation is limited and defined by AS/NZS 3808 or other standards. In reality, two layers would have thickness distribution inner:outer in the range of 30:70 to 70:30. Increasing the thickness of the inner layer improves the insulation resistance during fire stage, but it reduces the chance of surviving the water stage of the fire test, by reducing the thickness of the outer ceramifying layer.

In a preferred embodiment, the outer ceramifying layer is used as a sheath or jacket. This means that said outer ceramifying layer is used as the outmost layer of the cable.

In a preferred embodiment, the outer ceramifying layer includes at least 10% by weight of mineral silicate, from 8% to 40% by weight of at least one inorganic phosphate which forms a liquid phase at a temperature of no more than 800°C, and at least 15% by weight of a polymer base composition comprising at least 50% by weight of an organic polymer.

In a first variant of this embodiment, the elongated electrical conductor is a single core conductor. Thus, the single core conductor is insulated with the inner layer obtained from the fire resistant composition of the present invention, and the resulting insulated core conductor is then sheathed with the outer ceramifying layer.

In a second variant of this embodiment, the elongated electrical conductor is a multicore conductor. Thus, each core conductor is individually insulated with the inner layer obtained from the fire resistant composition of the present invention, and the resulting plurality of insulated core conductors is twisted, taped and sheathed with the outer ceramifying layer.

The core of the single core conductor the cores of the multicore conductor can be composed of a single wire or a multiwire.

### Brief description of the drawings

Embodiments of the present invention will now be described, by way of example only, with reference to the accompanying drawings, in which:
Figure 1 illustrates a section of a cable according to an embodiment of the invention;
Figure 2 illustrates a section of a cable according to another embodiment of the invention;
Figure 3 shows a graph of insulation resistance as a function of temperature for several two-layer insulations applied to a cable according to the invention.
Figure 4 shows a graph of insulation resistance as a function of temperature for several two layer and a single layer insulations applied to a cable of the prior art.
Figure 5 is an SEM image of the residue obtained after firing a silicone rubber composition of the prior art (composition 8).
Figure 6 is an SEM image of MgO residue after firing a composition of the prior art (composition 6).
Figure 7 is an SEM of Mg(OH)₂ residue after firing a composition of the prior art (composition 7).
Figure 8 is shows a graph of insulation resistance as a function of temperature for several insulations applied to a cable of the prior art and two cables of the present invention.

The numbering convention used in the drawings is that the digits in front of the full stop indicate the drawing number, and the digits after the full stop are the element reference numbers. Where possible, the same element reference number is used in different drawings to indicate corresponding elements.

It is to be understood that, unless indicated otherwise stated, the drawings are intended to be illustrative rather than exact representations, and are not necessarily drawn to scale. The orientation of the drawings is chosen to illustrate the features of the objects shown, and does not necessarily represent the orientation of the objects in use.

### Detailed description of the embodiment or embodiments

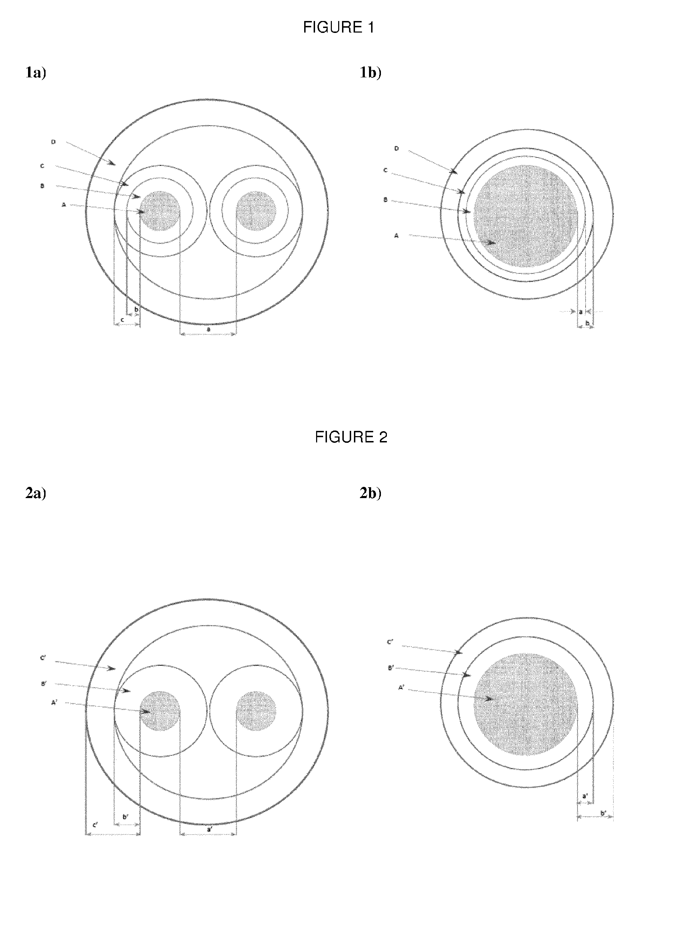

Figure 1 illustrates a section of a multicore cable (figure 1 a) or a single core cable (figure 1 b) according to the invention comprising an elongated electrical conductor A, an inner sacrificial layer B surrounding said elongated electrical conductor A, and an outer ceramifying layer C surrounding said inner sacrificial layer B. Currently, the inner sacrificial layer B is obtained from the fire resistant composition according to the invention. Said inner sacrificial layer B can be co-extruded with the outer ceramifying layer B without the need for crosslinking of the inner layer B. The cable is sheathed with a commercially available halogen-free, low-smoke compound D (HFFR sheath). More particularly, the cable of figure 1a comprises a multicore conductor composed of two insulated conductors, each of which being insulated with a two layer insulation (B + C), said two insulated conductors being surrounded by sheath D. The cable of figure 1b comprises a single core conductor being insulated with a two layer insulation (B + C), said insulated conductor being surrounded by sheath D. In figure 1a, after fire the distance between the outer surface of the conductor and the outer surface of the insulated conductor (i.e. the outer surface of the ceramifying layer C) is equal to ***c,*** as sheath D burns into soft ash and falls off. ***c*** is about 1.0 mm for a 2C 1.5 mm² cable. In figure 1b, after fire the distance between the outer surface of the conductor and the outer surface of the insulated conductor (i.e. the outer surface of the ceramifying layer C) is equal to ***b,*** i.e. 1.2 mm for a 35 mm² cable. In addition, in figure 1a, the distance between the outer surface of the conductor and the inner surface of the ceramifying layer C is equal to ***b,*** i.e. 0.5 mm and in figure 1b, the distance between the outer surface of the conductor and the inner surface of the ceramifying layer C is equal to ***a***, i.e. 0.6 mm.

Figure 2 illustrates a section of a multicore cable (figure 2a) or a single core cable (figure 2b) according to the invention having an elongated electrical conductor A', an inner layer B' surrounding said elongated electrical conductor A', and an outer ceramifying layer C' surrounding said inner layer B'. Currently, the inner layer B' is obtained from the fire resistant composition according to the invention. Said inner layer B' can be co-extruded with the outer ceramifying layer C' without the need for crosslinking of the inner layer B'. The outer ceramifying layer C' is used as a sheath (i.e. the outmost layer of the cable). More particularly, the cable of figure 2a comprises a multicore conductor composed of two insulated conductors, each of which being insulated with a single layer insulation B', said two insulated conductors being surrounded by sheath C' (i.e. ceramifying layer C'). The cable of figure 2b comprises a single core conductor being insulated with a single layer insulation B', said insulated conductor being surrounded by sheath C' (i.e. ceramifying layer C'). In figure 2a, after fire the distance between the outer surface of the conductor and the outer surface of the insulated conductor (i.e. the outer surface of the ceramifying layer C') is equal to ***c',*** i.e. 2.8 mm (insulation thickness of 1.0 mm + ceramifiable sheath of 1.8 mm). In figure 2b, after fire the distance between the outer surface of the conductor and the outer surface of the insulated conductor (i.e. the outer surface of the ceramifying layer C') is equal to ***b',*** i.e. 2.6 mm (insulation thickness of 1.2 mm + ceramifying sheath of 1.4 mm). In addition, in figure 2a, the distance between the outer surface of the conductor and the inner surface of the ceramifying layer C' is equal to ***b',*** i.e. 1.0 mm, and in figure 2a, the distance between the outer surface of the conductor and the inner surface of the ceramifying layer is equal to ***a',*** i.e. 1.2 mm.

The use of the outer ceramifying layer as a sheath (figure 2) leads to the following advantages:
- the number of layers is reduced, thus resulting in the reduction of the production costs;
- the distance between each conductor (i.e. the outer surface of the conductor) and the outer surface of the insulated conductor (i.e. the outer surface of the ceramifying layer) is increased, thus resulting in the decrease of the likelihood of short-circuits during the fire test;
- the distance between each conductor (i.e. the outer surface of the conductor) and the inner surface of the ceramifying layer (with higher ionic conductivity than sacrificial layer) is increased, thus resulting in the reduction of the leakage current between conductors and earth or between two conductors.

Various fire resistant compositions 1 to 4 according to the invention were prepared. Table 1 sets out the proportions of organic polymers, polyorganosiloxanes, silica, and inorganic filler (talc) for said four fire resistant compositions according to the invention.

| TABLE 1 | | | | |
|---|---|---|---|---|
| | SAMPLES weight % | | | |
| | 120412 | 130412 | 010512 | 060712 |
| Compositions | 1 | 2 | 3 | 4 |
| Engage 7380 (ethylene-butene copolymer) | 20 | 10 | 10 | 10 |
| LLDPE 7540 (linear low-density polyethylene) | 24 | 12 | 12 | 12 |
| Exact 8201 (ethylene based octene plastomer) | 12 | 6 | 6 | 6 |
| Lotader 3210 (terpolymer of ethylene, acrylic ester and maleic anhydride) | 4 | 2 | 4 | 2 |
| Genioplast S pelletized silicone gum | 0 | 50 | 8 | 12 |
| Silica Wacker H18 (fumed silica) | 40 | 20 | 12 | 6 |
| Talc MVR | 0 | 0 | 48 | 52 |
| Total composition | 100 | 100 | 100 | 100 |
| % silica in the composition | 40 | 35 | 14.4 | 9.6 |
| % organic polymer in the composition | 60 | 30 | 32 | 30 |
| % polyorganosiloxane in the composition | 0 | 35 | 5.6 | 8.4 |
| **AS/NZS 3013 test** | **Pass** | **Pass** | **Pass** | **Pass** |

Fire resistant compositions according to the present invention were prepared by mixing fumed silica with thermoplastic polymers and/or other additives such as inorganic fillers and/or polyorganosiloxanes. It is noted that Genioplast S® comprises 30% by weight of fumed silica and 70% by weight of silicone polymer and the silica used is an hydrophobic grade of fumed silica (Wacker HDK H18).

Thermoplastic polymers should be unsuitable for use as fire resistant insulation because it was thought that the thermoplastic polymers melt and drip from the cable, leaving the conductor exposed. However, it was found that a sufficient amount of inorganic filler can increase the viscosity sufficiently to inhibit dripping and enhance shape retention.

In addition, co-extrusion of thermoplastic polymers which do not need an intermediate crosslinking process, reduce the complexity of production by eliminating the need to cure the inner sacrificial layer and enable both layers to be extruded at the same time.

To provide a reference, four fire resistant compositions 5 to 8 of the prior art were prepared. Table 2 sets out the proportions of organic polymers, polyorganosiloxanes, and optionally inorganic fillers for said four fire resistant compositions of the prior art.

| TABLE 2 | | | | |
|---|---|---|---|---|
| | SAMPLES weight % | | | |
| | 230511 | 170112 | 100212 | Silicone |
| Compositions | 5 | 6 | 7 | 8 |
| Engage 7380 (ethylene-butene copolymer) | 13 | 0 | 12 | 0 |
| LLDPE 7540 (linear low-density polyethylene) | 16 | 15 | 14 | 0 |
| A.C. PE617 (polyethylene wax) | | 15 | 0 | 0 |
| Exact 8201 (ethylene based octene plastomer) | 5 | 0 | 4 | 0 |
| Fusabond MB100 HDPE-g-MAH | 1 | 0 | 1 | 0 |
| Masterbatch 50-002 siloxane | 1 | 0 | 0 | 0 |
| Ultra-Plast TP10 (processing aid) | 0 | 0 | 1 | 0 |
| Waker Elastosil R401/80S (silicone rubber) | 0 | 0 | 0 | 100 |
| Talc MVR | 16 | 0 | 0 | 0 |
| Mg(OH)₂ | 0 | 0 | 68 | 0 |
| Omyacarb 2T (CaCO₃) | 16 | 0 | 0 | 0 |
| Alumina CL370 (calcined alumina) | 16 | 0 | 0 | 0 |
| Causmag (MgO) | 16 | 70 | 0 | 0 |
| Total composition | 100 | 100 | 100 | 100 |
| **AS/NZS 3013 test** | **Fail** | - | - | - |

It is noted that MB50-002 is a siloxane polymer dispersed in a low density PE. It is used to improve lubricity and flow of thermoplastics.

Two cores of copper conductor were first insulated with each of the inner sacrificial layers 1 to 8 respectively obtained from fire resistant compositions 1 to 8 and then, with an outer thermoplastic ceramifying layer CER. The outer thermoplastic ceramifying layer (CER) had the following composition: 13% by weight of Engage 7380, 16% by weight of LLDPE, 5% by weight of Exact 8201, 1% by weight of stearic acid, 1% by weight of zinc-stearate, 14.5% by weight of APP, 14.5% by weight of Omyacarb 2T, 23% by weight of Talc MV R, and 12% by weight of Translink 37.

Produced cores 1 to 8 were then twisted, taped and sheathed with HFFR (halogen free flame retardant compound) to respectively provide 2 core 1.5 mm² cables 1 to 8. Approximately 1.2 m lengths of each cable were fired in a tube furnace to 1,050°C. A 2 core 1.5 mm² cable 9 was also prepared with a single ceramifying layer CER (that is to say without an inner sacrificial layer). Thus, cables 5 to 9 are not part of the present invention.

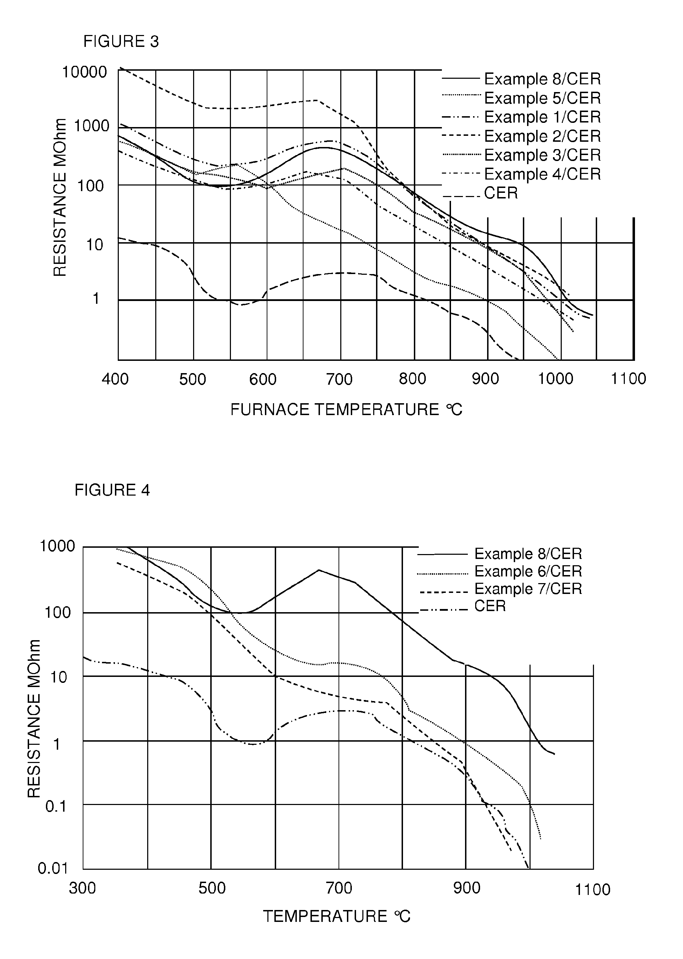

Figure 3 shows a graph of the insulation resistance between cores (spaced 1 cm apart) as a function of temperature for the cables 1 to 4, 5, 8 and 9 respectively comprising inner layers 1 to 4 according to the invention, inner layers 5 and 8 of the prior art and without any inner layer.

Furnace resistance measurements showed that high level of fumed silica (Composition 1) can support high insulation resistance throughout firing. This is even further enhanced by combining fumed silica with Genioplast (Composition 2) which came close to resistance of silicone rubber cable (Composition 8) at 1,000 °C and was also superior at early stages of firing. Replacing parts of silica and Genioplast (reducing the final SiO₂%) with talc (compositions 3 and 4) reduced resistance somewhat, but not by as much as experienced with prior art fire resistant compositions such as composition 5 that was tested against AS/NZS 3013 and failed. After firing, the formed residue included 35% by weight of SiO₂ (starting from the composition 1), 44% by weight of SiO₂ (starting from the composition 2), and 12% to 16% by weight of SiO₂ (starting from compositions 3 and 4).

As shown in Figure 3, Composition 5 performs better than the single ceramifying layer, but below the Compositions 1 to 4 according to the invention containing silica, each of which providing between about 0.5 to about 2 MOhms at 1000°C.

As a conclusion, the inner sacrificial layer obtained from any of the fire resistant composition 1 to 4 according to the invention can replace the inner sacrificial layer made from silicone rubber of the prior art. Indeed, all the fire resistant compositions 1 to 4 provide satisfactory electrical resistance at temperature up to 1,050°C, thus reducing leakage currents and allowing circuit integrity. Based on the above results, fire resistant compositions 1 to 4 were selected to prepare cables for passing the 2 hours fire in the AS3013 test. The cables maintained circuit integrity during the 2 hours of the test, i.e. they can be qualified as WS5X.

To improve the compounding and processing of the fire resistant compositions 1 and 2, the level of silica was reduced and talc was added as inorganic filler, improving processing and reducing the cost (Compositions 3 and 4). Talc is an inorganic filler with relatively high resistance at elevated temperatures. The non-silicone alternative of the present invention when compared to silicone rubber of the prior art is approximately 50% lower material volume cost.

Figure 4 shows a graph of the insulation resistance between cores as a function of temperature for the cables 6 to 8 and 9 respectively comprising inner layers 6 to 8 of the prior art and no inner layer.

Although MgO and Mg(OH)₂ are known to be highly resistant as fillers, the resistance of compositions containing these fillers fell off above about 800 °C. The main conclusion is that initial resistance of the filler on its own is important in that it should have reasonably high resistivity. In addition, the interaction of the inner sacrificial layer with the outer ceramifying layer is also important. Indeed, compared to silica, MgO and Mg(OH)₂ are not capable of preventing chemical and physical interactions between the electrical conductor and the outer ceramifying insulation at elevated temperature.

In addition, cables 6 and 7 made with a composition based on said fillers MgO (Composition 6) or Mg(OH)₂ (Composition 7) failed at early stages of the previous test.

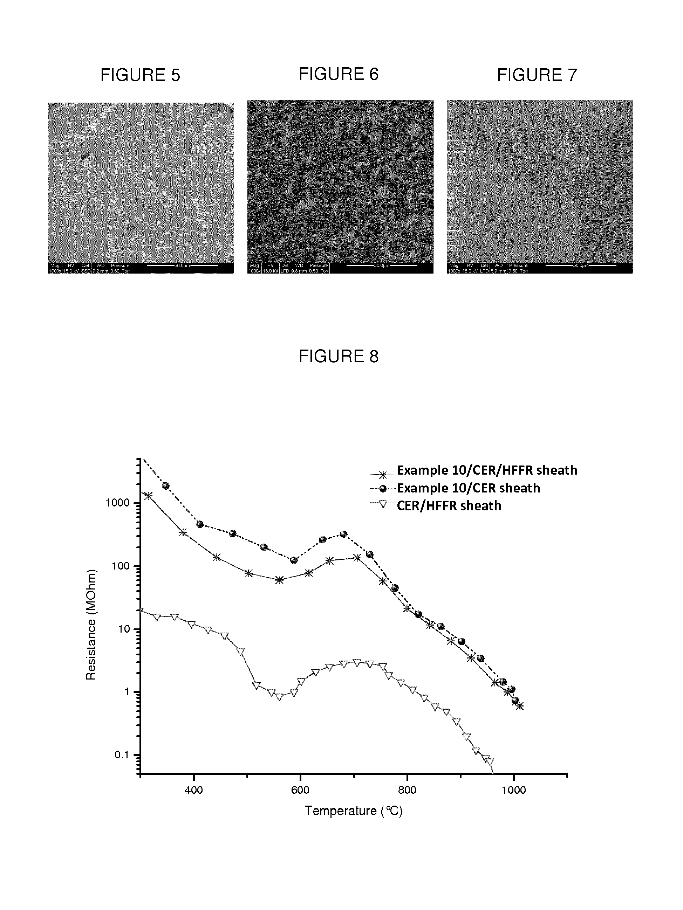

Figures 5 to 7 respectively show by scanning electron microscope (SEM) the resulting residues obtained after firing the composition of composition 8 (silicone rubber), the composition of composition 6 (including MgO filler) and the composition of composition 7 (including Mg(OH)₂ filler). The SEM of figure 5 shows the morphology of SiO₂ residue of fired silicone rubber which is a dense, compacted structure of particles. Figures 6 and 7 show that neither MgO (Figure 6) nor Mg(OH)₂ (Figure 7) produces a structure which resembled the structure of fired silicone (Figure 5).

As discussed above, using thermoplastics with silica as the sacrificial layer allows co-extrusion of two thermoplastic layers simultaneously, resulting in a finished insulated conductor with a thermoplastic inner layer having high levels of inorganic filler and an outer thermoplastic ceramifying layer. It was found that cables produced by this technique have the ability to withstand the 2 hours of furnace and three minutes of subsequent water spray required by the Australian Standard AS/NZS3013, and also European and International Standards for circuit integrity, such as BS6387, IEC60331, and others.

Another fire resistant composition 10 according to the invention is shown in Table 3:

| TABLE 3 | |
|---|---|
| | SAMPLES weight % |
| | 060712-v1.0 |
| Composition | 10 |
| Engage 7380 (ethylene-butene copolymer) | 10 |
| LLDPE 7540 (linear low-density polyethylene) | 12 |
| Exact 8201 (ethylene based octene plastomer) | 6 |
| Lotader 3210 (terpolymer of ethylene, acrylic ester and maleic anhydride) | 1 |
| Genioplast S pelletized silicone gum | 16 |
| Finabond wax 7500 | 1 |
| Talc MVR | 54 |
| Total composition | 100 |
| % silica in the composition | 4.8 |
| % organic polymer in the composition | 30 |
| % polyorganosiloxane in the composition | 11.2 |
| **AS/NZS 3013 test** | **Pass (WS5XW test)** |

Two cores of copper conductor were first insulated with the inner layer 10 obtained from fire resistant composition 10 and then, with an outer thermoplastic ceramifying layer CER. The outer thermoplastic ceramifying layer (CER) had the following composition: 13% by weight of Engage 7380, 16% by weight of LLDPE, 5% by weight of Exact 8201, 1% by weight of stearic acid, 1% by weight of zinc-stearate, 14.5% by weight of APP, 14.5% by weight of Omyacarb 2T, 23% by weight of Talc MV R, and 12% by weight of Translink 37.

Produced cores 10A was then twisted, taped and sheathed with HFFR (halogen free flame retardant compound) to respectively provide 2 core 1.5 mm² cable 10A. Approximately 1.2 m length of said cable was fired in a tube furnace to 1,050°C.

Another two cores of copper conductor were first insulated with the inner layer 10 obtained from fire resistant composition 10 and then twisted, taped and sheathed with the thermoplastic ceramifying layer CER to provide a 2 core 1.5 mm² cable 10B. Approximately 1.2 m length of said cable was fired in a tube furnace to 1,050°C.

Figure 8 shows a graph of the insulation resistance between cores (spaced 1 cm apart) as a function of temperature for the cables 10A, 10B and 9. Improved resistance over the whole temperature range was evident for the new cable 10B in which the ceramifying layer is used as a sheath layer (i.e. outmost layer of the cable).

A single core cable was also produced according to figure 2b, by extruding the fire resistance composition 10 over 4 mm² flexible (Class 5) plain annealed copper (PAC) conductor (insulation thickness 0.9 mm), sheathed with the thermoplastic ceramifying layer CER (wall thickness of 1.1 mm). This cable was tested to AS3013 and passed OK to both fire stage and water spray, which means that it can be qualified as WS5XW.

In this specification, reference to a document, disclosure, or other publication or use is not an admission that the document, disclosure, publication or use forms part of the common general knowledge of the skilled worker in the field of this invention at the priority date of this specification, unless otherwise stated.

Where ever it is used, the word "comprising" is to be understood in its "open" sense, that is, in the sense of "including", and thus not limited to its "closed" sense, that is the sense of "consisting only of". A corresponding meaning is to be attributed to the corresponding words "comprise", "comprised" and "comprises" where they appear.

It will be understood that the invention disclosed and defined herein extends to all alternative combinations of two or more of the individual features mentioned or evident from the text. All of these different combinations constitute various alternative aspects of the invention.

While particular embodiments of this invention have been described, it will be evident to those skilled in the art that the present invention may be embodied in other specific forms without departing from the essential characteristics thereof. The present embodiments and examples are therefore to be considered in all respects as illustrative and not restrictive, and all modifications which would be obvious to those skilled in the art are therefore intended to be embraced therein.

## Claims

1. A fire resistant composition including at least one organic polymer and at least one inorganic material, wherein said fire resistant composition is adapted to provide after exposure to high temperature a high resistance residue including at least 10% by weight of SiO₂.

2. A fire resistant composition as claimed in claim 1, wherein the inorganic material is an inorganic non polymeric material, or a mixture of an inorganic non polymeric material and an inorganic polymeric material.

3. A fire resistant composition as claimed in any one of claim 1 or claim 2, wherein the inorganic non polymeric material includes at least 2% by weight of silica (SiO₂).

4. A fire resistant composition as claimed in any one of the preceding claims, wherein the inorganic non polymeric material includes up to 45% by weight of silica (SiO₂).

5. A fire resistant composition as claimed in any one of claim 3 or claim 4, wherein the inorganic non polymeric material is fumed silica.

6. A fire resistant composition as claimed in any one of the preceding claims, wherein the inorganic polymeric material includes a least one polyorganosiloxane.

7. A fire resistant composition as claimed in claim 6, wherein the inorganic polymeric material includes up to 45% by weight of polyorganosiloxanes.

8. A fire resistant composition as claimed in any one of claim 6 or claim 7, wherein the inorganic polymeric material includes at least 2% by weight of polyorganosiloxanes.

9. A fire resistant composition as claimed in any one of claims 6 to 8, wherein the polyorganosiloxane is in the form of pelletized silicone polymer.

10. A fire resistant composition as claimed in any one of the preceding claims, wherein the organic polymer is selected from ethylene-butene copolymer, linear low density polyethylene (LLDPE), ethylene-octene copolymer, ethylene-acrylic ester maleic anhydride terpolymer, ethylene propylene polymer (EPR), ethylene propylene diene polymer (EPDM), and mixture thereof.

11. A fire resistant composition as claimed in any one of the preceding claims, further including at least one inorganic filler.

12. A fire resistant composition as claimed in claim 11, wherein the inorganic filler has low conductivity at elevated temperatures.

13. A fire resistant composition as claimed in any one of claim 11 or claim 12, wherein the inorganic filler is selected from non-reactive silicates.

14. A fire resistant composition as claimed in any one of the preceding claims, wherein said fire resistant composition does not include glass forming components.

15. A fire resistant composition as claimed in any one of the preceding claims, wherein it is a fire resistant thermoplastic composition.

16. A fire resistant composition as claimed in any one of the preceding claims, wherein it is a fire resistant insulating composition.

17. A cable comprising:
- an elongated electrical conductor,
- an inner layer obtained from the fire resistant composition as claimed in any one of the preceding claims, said inner layer surrounding said elongated electrical conductor, and
- an outer ceramifying layer surrounding said inner layer.

18. A cable as claimed in claim 17, wherein the inner layer is a thermoplastic layer.

19. A cable as claimed in claim 17 or claim 18, wherein the outer layer is a thermoplastic layer.

20. A cable as claimed in any one of claims 17 to 19, wherein the outer ceramifying layer is the outmost layer of the cable.
